# EUROPEAN PATENT SPECIFICATION

(11) **EP 4 307 120 B1**
(45) Date of publication and mention of the grant of the patent: **17.12.2025**
(21) Application number: 22766737.5
(22) Date of filing: 14.02.2022
(51) Int. Cl.: G06F 11/34, G06F 11/3604, G06F 8/71, G06F 8/77, G06N 20/00, G06F 8/41, G06F 8/75

(54) **SOFTWARE PERFORMANCE VERIFICATION SYSTEM AND SOFTWARE PERFORMANCE VERIFICATION METHOD**
SYSTEM UND VERFAHREN ZUR VERIFIZIERUNG DER SOFTWARELEISTUNG
SYSTÈME DE VÉRIFICATION DE PERFORMANCE DE LOGICIEL ET PROCÉDÉ DE VÉRIFICATION DE PERFORMANCE DE LOGICIEL

(30) Priority: 10.03.2021 JP 2021038744
(43) Date of publication of application: 17.01.2024
(73) Proprietor: Hitachi, Ltd., Tokyo 100-8280 (JP)
(72) Inventor: YANG, Menglong, Tokyo 100-8280 (JP); OYAMA, Kyohei, Tokyo 100-8280 (JP); SHIMBARA, Daisuke, Tokyo 100-8280 (JP)
(74) Representative: Mewburn Ellis LLP
(86) International application number: PCT/JP2022/005632
(87) International publication number: WO 2022/190772

(56) References cited:
- WO-A1-2016/016975
- US-A1- 2018 150 742
- US-A1- 2018 276 562
- KOBORI, KAZUO; YAMAMOTO TETSUO, MATSUSITA MAKOTO: "Implementation of Software Reuse Support System Using Dependency of Method Call", IEICE TECHNICAL REPORT, DENSHI JOUHOU TSUUSHIN GAKKAI, JP, vol. 104, no. 722, 1 January 2005 (2005-01-01), JP , pages 13 - 18, XP009539480, ISSN: 0913-5685

## Description

### CROSS-REFERENCE TO RELATED APPLICATION

This application is based upon and claims the benefit of priority from Japanese Patent Application No. 2021-038744, filed on March 10, 2021.

### Technical Field

The present invention relates to a software performance verification system and a software performance verification method.

### Background Art

JP-2012-234448-A describes a software performance prediction system that predicts the performance of software. The software performance prediction system receives input of an initial source code or a changed source code from multiple terminals in connection with software development. The received source code is registered as source code information with a database. A comparison in software performance is made between the changed source code and the old source code included in the registered source code information so as to calculate the rate of reduction in performance between the new and old source codes. It is then determined whether the rate of performance reduction exceeds a predetermined value. If the performance reduction rate is determined to exceed the predetermined value, the result of the determination is reported to the outside.

JP-2020-149681-A describes a system analysis apparatus that predicts a performance bottleneck in system development. The system analysis apparatus detects past system design information that is similar to development system design information to obtain a result of the similar system detection. A search is made for past system function parts that are similar to development system function parts included in the development system design information so as to obtain a result of the similar function search. Using development system requirements, past system requirements, the development system function parts, the past system function parts, and the result of past system measurement, the system analysis apparatus acquires system part performance information in which the development system function parts and the past system function parts are associated with performance information. From the result of the similar system detection and from the system part performance information, the system analysis apparatus detects a system function part that constitutes a performance bottleneck.

US 2018/0150742 A1 describes a probabilistic machine learning model generated to identify potential bugs in a source code file. Source code files with and without bugs are analyzed to find features indicative of a pattern of the context of a software bug, wherein the context is based on a syntactic structure of the source code. The features may be extracted from a line of source code, a method, a class and/or any combination thereof. The features are then converted into a binary representation of feature vectors that train a machine learning model to predict the likelihood of a software bug in a source code file.

US 2018/0276562 A1 describes a machine learning model that can be trained to infer the probability of the presence of categories of a software bug in a source code file. A bug tracker can provide information concerning the category to which a software bug belongs. The bug data supplied to a machine learning model for inferring the presence of particular categories of bugs can be filtered to exclude a specified category or categories of bugs. Information including but not limited to organizational boundaries can be inferred from the category of bugs present in a body of source code. The inferred organization boundaries can be used to generate team-specific machine learning models.

"Implementation of Software Reuse Support System Using Dependency of Method Call" by Kobori, Kazuo; Yamamoto, Tetsuo; Matsusita, Makoto; Inoue, Katsuro (IEICE technical report, Denshi Jouhou Tsuushin Gakkai, JP, vol. 104, no. 722, 1 January 2005, pages 13-18) relates to a program understanding system that uses dependency of Java method. The system is implemented on SPARS-J and applied to an open-source program for validation.

WO 2016/016975 A1 describes a development supporting system that extracts important test cases in accordance with development statuses of a program, test statuses, etc. The development supporting system according to a representative embodiment includes a configuration managing unit that retains and manages the program and each of the test cases in a repository, and a test executing unit that executes the test case and stores a test result in the repository. The test case is managed in the repository in association with information of a type thereof, the configuration managing unit judges a development status of the program and sets a priority for each of the test cases based on the development status, and the test executing unit extracts the test case to be executed based on the priority.

### Summary of the Invention

### Problem to be Solved by the Invention

In software development, it is necessary to meet two categories of requirements: requirements for the functions to be incorporated in the software (referred to as "function requirements" hereunder), and requirements for the performance to be achieved by the software (referred to as "performance requirements" hereunder). Whether the function requirements are met can be verified by developers on the basis of the source code at each step of software development. On the other hand, it is difficult to determine whether the performance requirements are met at the source code level. The verification of software performance by use of so-called performance analysis tools (profilers) cannot be made until, at a later stage of development, when the source code and data necessary for executable code generation (compile, build, etc.) have been prepared. In a case where the performance requirements are found not to be satisfied, that means a large number of rework man-hours are needed, which significantly affects production efficiency. In the verification of software performance, a large number of preparation man-hours are involved because it is necessary to set test cases that envisage various execution states and to prepare large quantities of test data for each of the test cases.

JP-2012-234448-A compares the performance of the software based on the changed source code with the performance of the software based on the old source code included in the registered source code information. To make the comparison, however, requires compiling and building the changed source code. It follows that the performance cannot be verified until the necessary source code and data have been prepared. Further, the technology described in JP-2012-234448-A does not envision programming languages that need not be compiled, such as interpreter-type languages. Furthermore, JP-2012-234448-A obtains the rate of reduction in performance between the new and old source codes, which requires preparing test data for each of the new and the old source codes.

JP-2020-149681-A compares the design information of the development system with the design information of the past system, i.e., makes a comparison therebetween on the level of design information to improve the efficiency of system design. With nothing assumed of the verification of performance issues on specific code levels, the technology described in JP-2020-149681-A is not intended to offload the verification of performance at the time of software development.

The present invention has been made in view of the above circumstances and aims to provide a software performance verification system and a software performance verification method for efficiently verifying the performance of software.

### Means for Solving the Problem

The invention is defined by the features laid down in the independent claims 1 and 10. Further enhancements are provided by the dependent claims.

The foregoing and other problems and the solutions to these problems will become evident from a reading of the following detailed description of preferred embodiments taken in conjunction with the appended drawings. Advantages of the Invention

The present invention makes it possible efficiently to verify the performance of software.

### Brief Description of the Drawings

FIG. 1 is a system flowchart depicting a schematic configuration of a performance verification system.
FIG. 2A is a diagram explaining an exemplary partial code extraction process.
FIG. 2B is a flowchart explaining the exemplary partial code extraction process.
FIG. 3A is a diagram explaining another exemplary partial code extraction process.
FIG. 3B is a flowchart explaining the other exemplary partial code extraction process.
FIG. 4A is a diagram explaining an exemplary feature vector generation process.
FIG. 4B is a flowchart explaining the exemplary feature vector generation process.
FIG. 5A is a diagram explaining another exemplary feature vector generation process.
FIG. 5B is a flowchart explaining a word dictionary generation process.
FIG. 5C is a flowchart explaining a feature vectorization process.
FIG. 6A is a diagram explaining an exemplary method of training a performance verification model.
FIG. 6B is a flowchart explaining the exemplary method of training the performance verification model.
FIG. 7A is a diagram explaining another exemplary method of training the performance verification model.
FIG. 7B is a flowchart explaining the other exemplary method of training the performance verification model.
FIG. 8A is a diagram explaining a usage example of the performance verification system.
FIG. 8B is a flowchart explaining the processing of the performance verification system in the usage example.
FIG. 9A is a diagram explaining another usage example of the performance verification system.
FIG. 9B is a flowchart explaining the processing of the performance verification system in the other usage example.
FIG. 10 depicts an exemplary information processing apparatus used to configure the performance verification system, among others.

### Modes for Carrying Out the Invention

Preferred embodiments of the present invention are described below with reference to the accompanying drawings. The ensuing description and the drawings are examples intended to explain the present invention and thus may be simplified or abbreviated as needed for purposes of clarification. The present invention may be implemented in various other embodiments. Unless specifically noted, each of the constituent elements involved may be singular or multiple. Throughout the ensuing description and the appended drawings, like reference signs designate like or corresponding constituent elements having identical or similar functions, and the explanations of such elements will be omitted where they are redundant. In the ensuing description, the character "S" prefixed to a reference sign denotes a processing step.

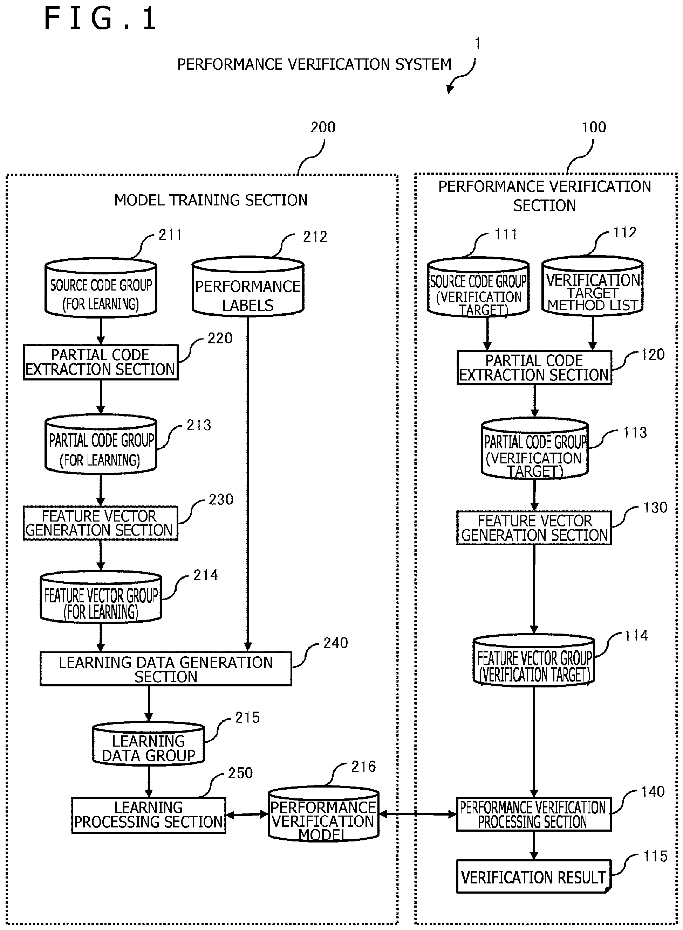

FIG. 1 is a system flowchart depicting a schematic configuration of a software performance verification system (abbreviated as "performance verification system 1" hereunder), which is an information processing system explained as one embodiment of the present invention. The performance verification system 1 verifies the performance of software by inputting a program code such as a source code (referred to as "code" hereunder) described in a predetermined programming language to a machine learning model (referred to as "performance verification model 216" hereunder), the program code being generated in the development or maintenance of the software. Indicators indicative of the performance include, for example, throughput, response time, and resource usage.

The performance verification model 216 is made to learn (trained) using learning data (training data) having an existing code description associated with information indicative of the performance of the code of interest (referred to as "performance information" hereunder) as a label (correct data).

The language for describing the code targeted for verification is not necessarily limited to any specific language. Any language is acceptable as long as it can be interpreted by an average-ability programmer. The method by which to generate an executable code based on the above code is not necessarily limited to any specific method. For example, the method may involve using a compiler language that requires compiling and building (also referred to as linking and making) in generating the executable code, or a sequential execution type interpreter language.

The above code is not necessarily limited to any specific type. For example, the code may be a webpage description language, script language, language for describing applications running on the server side, language for describing systems such as an operating system, language for describing embedded software, or language for describing batch processing.

The verification target code may be a code prepared anew at the time of development or a code updated or added at the time of maintenance. The above code may be one that is described by users such as software development engineers in a stand-alone development environment, or one that is generated in a joint development environment using a repository environment in which multiple information processing apparatuses are interconnected via a communication network.

What follows is a description, for example, of the case where the verification target code is the source code of a compiler language.

The performance verification model 216, not necessarily limited to any specific type, may be assumed to be of a type that performs binary classification or multi-class classification, for example. The schemes of machine learning for implementing the performance verification model 216 include, for example, DNN (Deep Neural Network), SVM (Support Vector Machine), decision tree, and k nearest neighbors (k-means). The performance verification model 216 is expressed by a matrix that includes features and weight information regarding each feature (parameters), for example.

The existing code used to generate the learning data is, for example, the code (referred to as "existing code" hereunder) used by an existing information processing system similar in function and configuration (referred to as "existing similar system") to an information processing system to be implemented using the verification target code (referred to as "verification target system" hereunder). The similarities in function and configuration between the verification target system and the existing similar system are determined on the basis of application fields of the systems, methods of implementing the systems, environments in which to execute the software constituting the systems, types of users using the systems, and commonalities between the programming languages used for development, for example.

What is used as the label associated with the existing code for generating the learning data is, for example, information obtained from an execution log acquired in the production and test environments regarding the executable code based on the existing code, and information obtained from the results of test runs and simulations carried out on the executable code. Alternatively, the performance information set by those well versed in the existing similar system may be used as the label, for example.

As depicted in FIG. 1, the performance verification system 1 has the functions of a performance verification section 100 and a model training section 200. Of these sections, the performance verification section 100 verifies performance using the performance verification model 216 on the basis of the verification target source code. Also, the performance verification section 100 generates learning data based on the existing code, and trains the performance verification model 216 using the generated learning data.

As illustrated in FIG. 1, the performance verification section 100 includes a partial code extraction section 120, a feature vector generation section 130, and a performance verification processing section 140.

Of these sections, the partial code extraction section 120 extracts from a source code group (verification target) 111 a description corresponding to each method in a verification target method list 112 (the description is referred to as "partial code (verification target)" hereunder). The partial code extraction section 120 outputs each partial code (verification target) thus extracted as a partial code group (verification target) 113. The verification target method list 112 is a list of the names of the methods targeted for verification. The content of the list is set by the user, for example.

The feature vector generation section 130 converts each partial code (verification target) in the partial code group (verification target) 113 into a feature vector, and outputs the converted feature vectors as a feature vector group (verification target) 114.

The performance verification processing section 140 inputs each feature vector in the feature vector group (verification target) 114 to the performance verification model 216. Given the input, the performance verification model 216 outputs performance information. The performance verification processing section 140 generates as a verification result 115 information based on the performance information output from the performance verification model 216. The performance verification processing section 140 offers the verification result 115 to the user via a user interface, for example.

As depicted in FIG. 1, the model training section 200 includes a partial code extraction section 220, a feature vector generation section 230, a learning data generation section 240, and a learning processing section 250.

Of these sections, the partial code extraction section 220 extracts a code (referred to as "partial code (for learning)" hereunder) from the source codes (referred to as "source code group (for learning) 211" hereunder) used to train the performance verification model 216. The partial code extraction section 220 outputs the extracted partial codes (for learning) as a partial code group (for learning) 213.

The feature vector generation section 230 converts the partial codes (for learning) in the partial code group (for learning) 213 into feature vectors. The feature vector generation section 230 outputs the converted feature vectors as a feature vector group (for learning) 214.

The learning data generation section 240 generates at least one learning data item (a set of a feature vector and a label) by associating each feature vector in the feature vector group (verification target) 114 with a corresponding label from among performance labels 212. The learning data generation section 240 outputs the learning data items thus generated as a learning data group 215.

The learning processing section 250 inputs the feature vector of each learning data item in the learning data group 215 to the performance verification model 216. The learning processing section 250 uses a difference between the output of the performance verification model 216 given the input feature vector on one hand and the label associated with the input feature vector on the other hand in order to adjust the parameters of the performance verification model 216. By so doing, the learning processing section 250 trains the performance verification model 216.

Below is a detailed description of each of the functions indicated in FIG. 1.

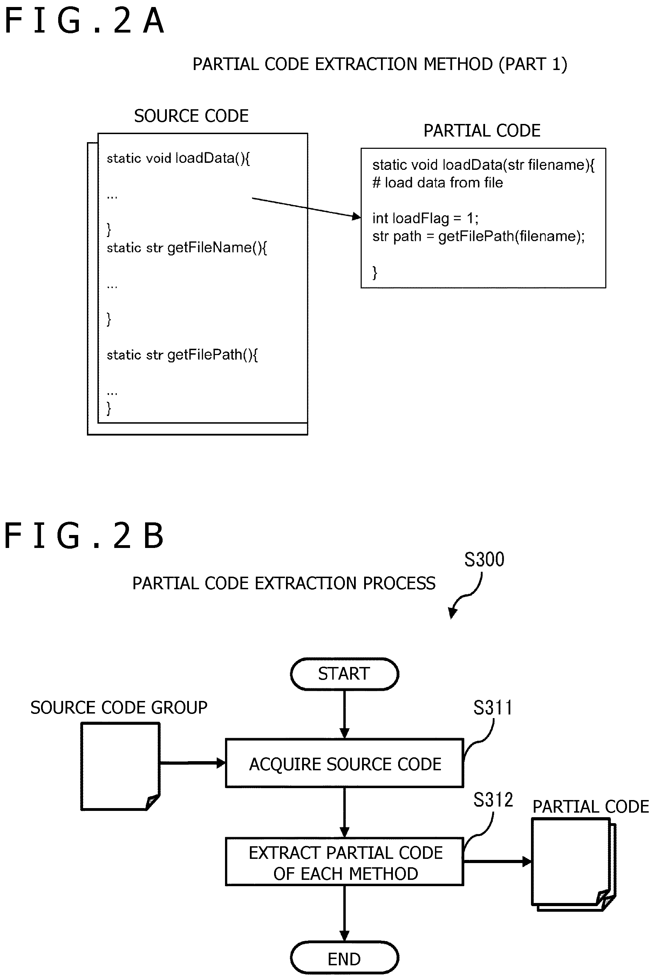

FIG. 2A depicts an exemplary process in which the partial code extraction section 120 or the partial code extraction section 220 (generically referred to as "partial code extraction section" hereunder) in FIG. 1 extracts the partial code (verification target) or the partial code (for learning) (generically referred to as "partial code" hereunder) from the source code group (verification target) 111 or the source code group (for learning) 211 (generically referred to as "source code group" hereunder) (the process is referred to as "partial code extraction process S300 hereunder). In this example, the partial code extraction section extracts the partial codes in units of methods from the source code group.

From the source code group (verification target) 111, the partial code extraction section 120 extracts as a partial code (verification target) the description of the method corresponding to each method in the verification target method list 112, for example. The partial code extraction section 220 extracts as a partial code (for learning) the description of each method included in the source code group (for learning) 211, for example.

FIG. 2B is a flowchart explaining the partial code extraction process S300. The partial code extraction section first acquires a source code from the source code group (S311). The partial code extraction section then extracts a partial code from the acquired source code (S312).

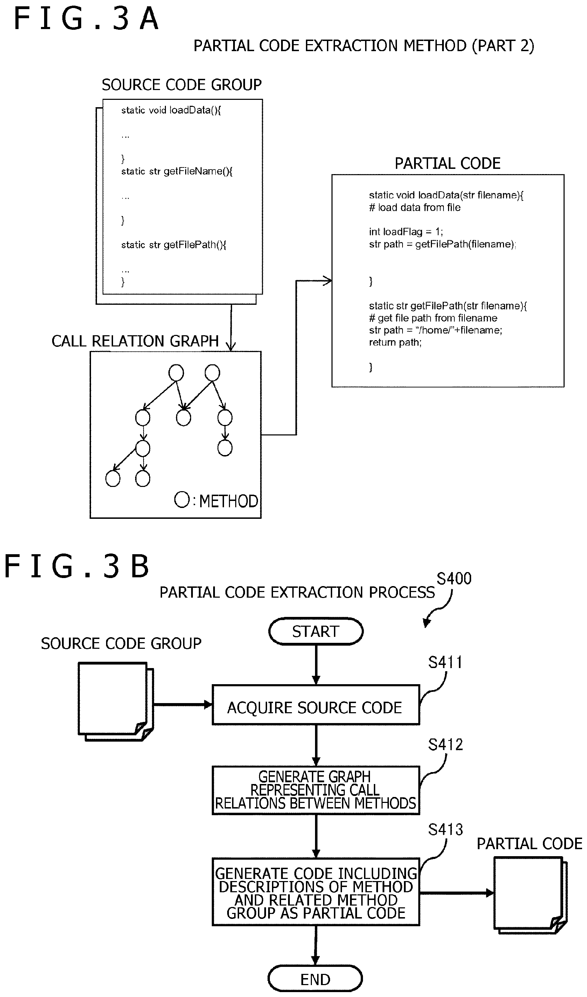

FIG. 3A is a diagram explaining another example of the partial code extraction process S300 (referred to as "partial code extraction process S400" hereunder). In this example, the partial code extraction section extracts, from the source code group (e.g., source code group configuring an information processing system such as an application system), a code including the description of a given method and a method group having a call relation with that method (referred to as "related method group" hereunder) as a partial code.

As indicated in FIG. 3A, the partial code extraction section first generates a graph representing the call relation to each method from the source code group. On the basis of the generated graph, the partial code extraction section extracts the code including the description of a given method and the description of the related method group of that method as the partial code.

From the source code group (verification target) 111, the partial code extraction section 120 extracts as the partial code (verification target) the code that includes the description of a given method in the verification target method list 112 and the description of the related method group of that method. The partial code extraction section 220 extracts as the partial code (for learning) the code that includes the description of a given method in the source code group (for learning) 211 and the description of the related method group of that method, for example.

FIG. 3B is a flowchart explaining the partial code extraction process S400. As indicated in FIG. 3B, the partial code extraction section acquires a source code from the source code group (S411). Subsequently, on the basis of the acquired source code, the partial code extraction section generates a graph representing the call relations between methods (S412). The partial code extraction section then extracts as a partial code the code including the description of a given method in the source code and the description of the related method group of that method (S413).

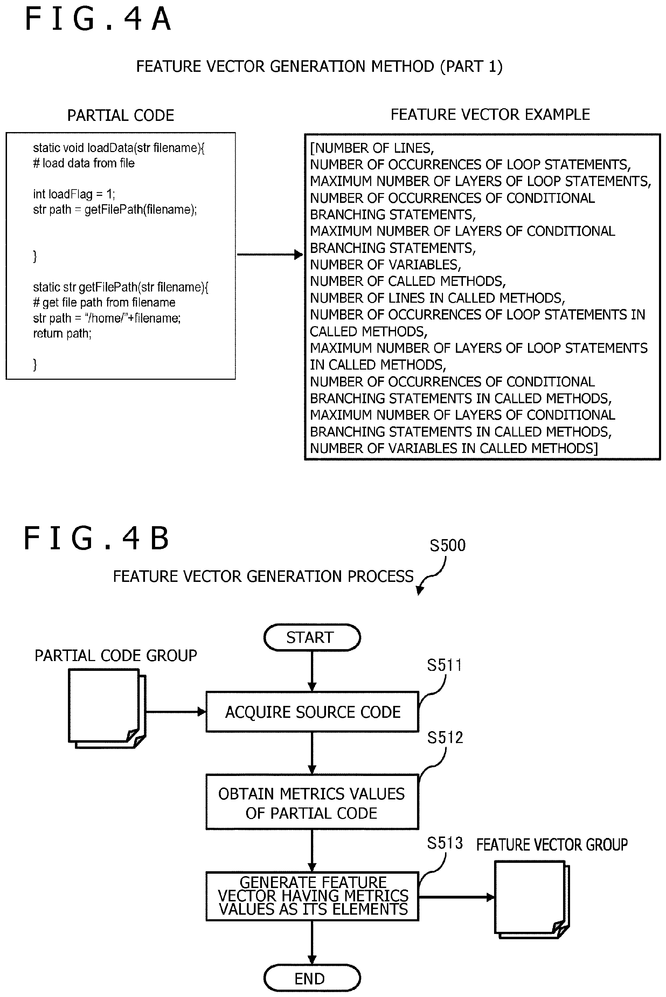

FIG. 4A is a diagram explaining an exemplary process in which the feature vector generation section 130 or feature vector generation section 230 (generically referred to as "feature vector generation section" hereunder) in FIG. 1 converts a partial code (verification target) or a partial code (for learning) (generically referred to as "partial code" hereunder) into a feature vector (the process is referred to as "feature vector generation process S500" hereunder). In this example, the feature vector generation section generates the feature vector on the basis of metrics values indicative of the features of the partial code. The metrics values include, for example, the number of lines, number of occurrences of loop statements, maximum number of layers of loop statements, number of occurrences of conditional branching statements, maximum number of layers of conditional branching statements, number of variables in use, number of called methods, number of lines in called methods, number of occurrences of loop statements in called methods, maximum number of layers of loop statements in called methods, number of occurrences of conditional branching statements in called methods, maximum number of layers of conditional branching statements in called methods, and number of variables in called methods, in the partial code. The feature vector generation section generates as the feature vector the vector having these metrics values as its elements.

When the metrics values in the partial code are used for feature vector generation as described above, it is possible to generate a feature vector having the metrics values of the partial code as the features, and to execute performance verification based on the differences between the partial code metrics values.

FIG. 4B is a flowchart explaining the feature vector generation process S500. The feature vector generation section first acquires a partial code from the partial code group (S511). The feature vector generation section then obtains the metrics values of each acquired partial code (S512). Subsequently, the feature vector generation section generates a feature vector having the metrics values of each partial code as its elements (S513).

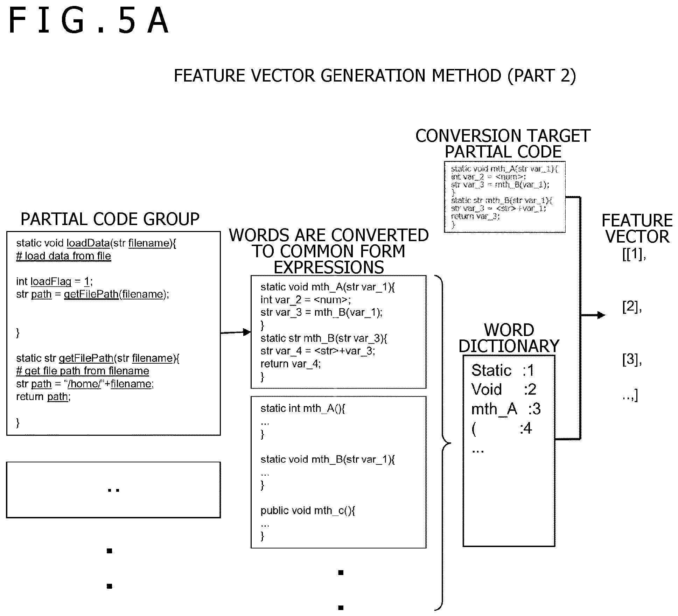

FIG. 5A is a diagram explaining another example of the feature vector generation process S500 (referred to as "feature vector generation process S600" hereunder). In this example, the feature vector generation section generates feature vectors on the basis of a word dictionary made up of information associating words expressed in common form with signs.

Specifically, the feature vector generation section converts into common form expressions the words (method name (function name), variable type, variable name, data type, storage class specifier, etc.) described in the partial code group extracted from the source code group (e.g., source code group configuring one information processing system such as an application system). The expressions are each associated with a different sign to generate a word dictionary. In the example in FIG. 5A, the feature vector generation section generates a word dictionary in which a storage class specifier "static" is converted into "Static," a data type "void" into "Void," and a method name "loadData" into "mth_A," the expressions being associated respectively with signs "1," "2," "3," and "4."

The feature vector generation section then converts into common form expressions the words included in the partial code targeted for feature vector conversion, acquires from the word dictionary the signs corresponding to the converted expressions, and generates as a feature vector the vector having the acquired signs as its elements. In FIG. 5A, the elements of the signs "1," "2," and "3" corresponding to the common form expressions "Static," "Void," and "mth_A" of the words included in the conversion target partial code are arranged in order of their occurrences in the partial code to generate the feature vector.

When the feature vector is generated on the basis of the combination of the words described in the partial code as explained above, it is possible to generate, for example, a feature vector that captures the structure of the partial code as the feature, and thereby to carry out performance verification based on structural differences in the partial code.

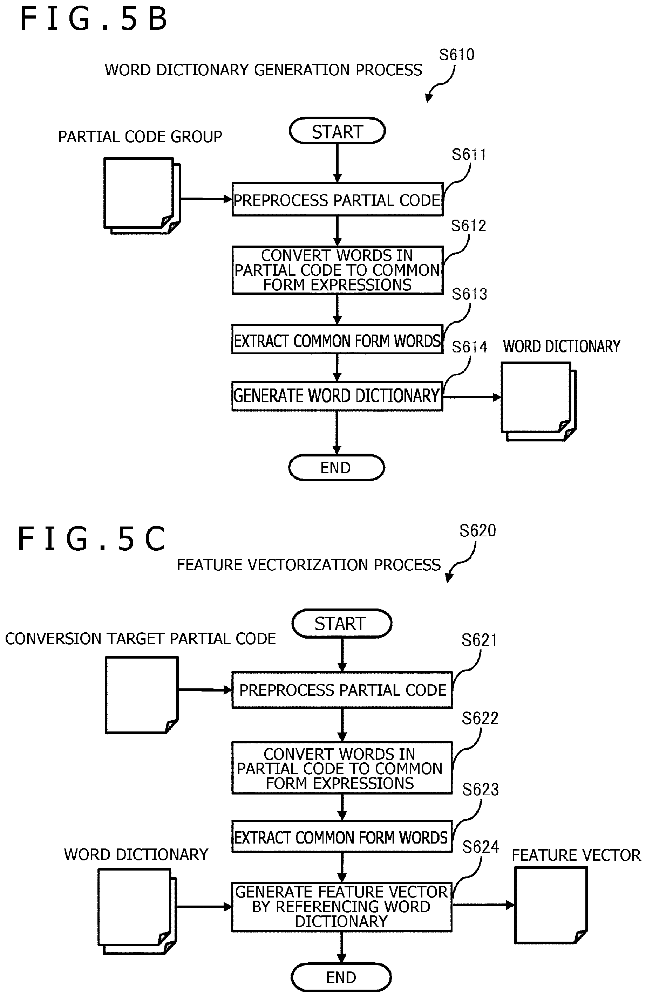

FIG. 5B is a flowchart explaining a process in which the feature vector generation section, during the feature vector generation process S600, generates the word dictionary from the partial code group (the process is referred to as "word dictionary generation process S610" hereunder). The feature vector generation section first preprocesses the partial codes in the partial code group (e.g., deleting unnecessary descriptions such as comment statements; S611). The feature vector generation section then converts into common form expressions the words described in the preprocessed partial codes (S612). The feature vector generation section thereafter extracts the words expressed in common form from the converted partial codes (S613). The feature vector generation section then generates the word dictionary by associating the extracted words in common form with signs (S614).

FIG. 5C is a flowchart explaining a process in which the feature vector generation section, during the feature vector generation process S600, converts a conversion target partial code into a feature vector by referencing the word dictionary (the process is referred to as "feature vectorization process S620" hereunder). The feature vector generation section first acquires the conversion target partial code and preprocesses the acquired partial code (e.g., deleting unnecessary descriptions such as comment statements; S621). The feature vector generation section then converts the words described in the preprocessed acquired partial code into common form expressions (S622). The feature vector generation section thereafter extracts the words expressed in common form from the converted partial code (S623). The feature vector generation section converts the words extracted by referencing the word dictionary into signs, and generates a feature vector by arranging the converted signs in order of their occurrences (S624).

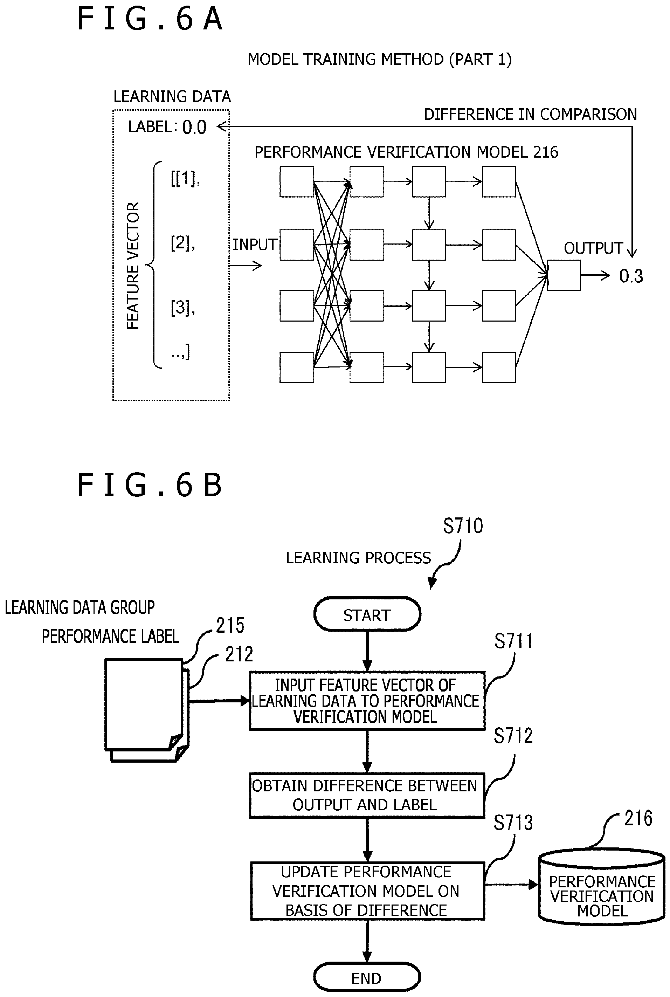

FIG. 6A is a diagram explaining an exemplary process in which the learning processing section 250 in FIG. 1 trains the performance verification model 216 using the learning data from the learning data group 215 (the process is referred to as "learning process S710" hereunder). This is an example where the performance verification model 216 is a binary classification model and where the performance verification model 216 outputs a single indicator indicative of the performance of the partial code. When a binary classification model is used as the performance verification model 216, it is possible to verify, for example, whether the performance meets relevant criteria. What is explained in this example is the case where the indicator is a value indicative of the probability of there being a problem with the performance of the process implemented on the basis of the partial code.

In this example, the learning processing section 250 inputs the feature vector from the learning data (combination of the feature vector and label) into the performance verification model 216. Given the input, the performance verification model 216 outputs a value ("0.3" in this example). On the basis of the difference between this output value and the label of the learning data ("0.0" in this example), the learning processing section 250 adjusts the parameters of the performance verification model 216.

FIG. 6B is a flowchart explaining the learning process S710. The learning processing section 250 first acquires the learning data from the learning data group 215, and inputs the feature vector of the acquired learning data to the performance verification model 216 (S711). The learning processing section 250 then obtains the difference between the output of the performance verification model 216 and the label of the learning data (S712). The learning processing section 250 thereafter updates the parameters of the performance verification model 216 on the basis of the obtained difference (S713).

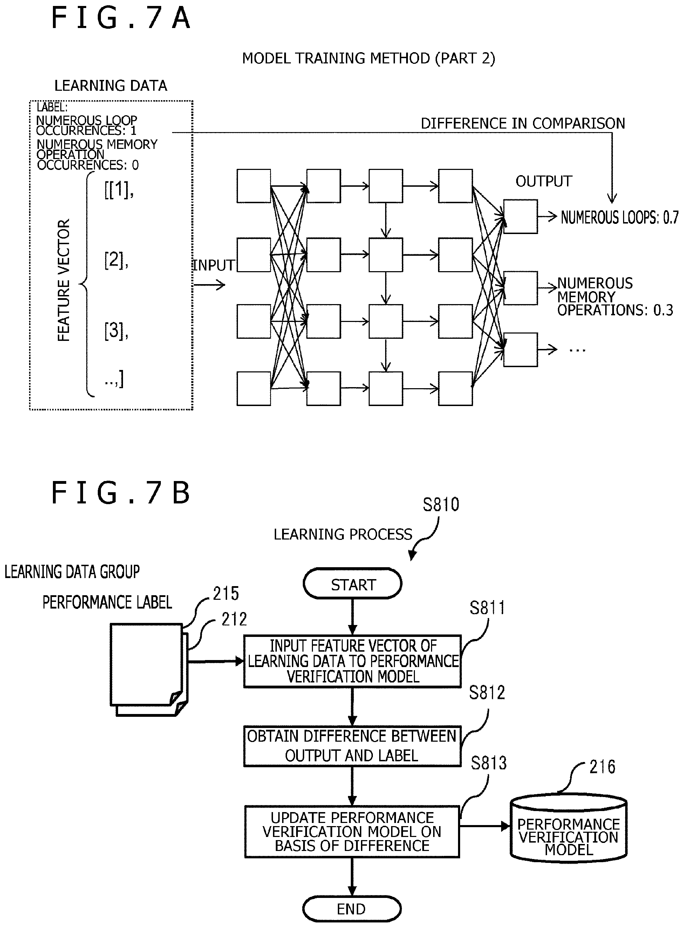

FIG. 7A is a diagram explaining another exemplary process in which the learning processing section 250 in FIG. 1 trains the performance verification model 216 using the learning data group 215 (the process is referred to as "learning process S810" hereunder). This is an example where the performance verification model 216 is a multiple classification model and where the performance verification model 216 outputs multiple indicators indicative of the performance of the partial code (the multiple indicators are based on different viewpoints). When a multiple classification model is used as the performance verification model 216, it is possible to verify, for example, whether the performance meets relevant criteria from different viewpoints (e.g., number of loops and number of memory operations).

In this example, the learning processing section 250 inputs the feature vector from the learning data (combination of the feature vector and label) into the performance verification model 216. Given the input, the performance verification model 216 outputs values from different viewpoints ("numerous loops: 0.3," "numerous memory operations: 0.3" in this example). On the basis of the difference between each of the output values and the label of the learning data ("numerous loop occurrences: 1," "numerous memory operation occurrences: 0" in this example), the learning processing section 250 adjusts the parameters of the performance verification model 216.

FIG. 7B is a flowchart explaining an example of the learning process S810. The learning processing section 250 first acquires the learning data from the learning data group 215, and inputs the feature vector of the acquired learning data to the performance verification model 216 (S811). The learning processing section 250 then obtains differences between the output of the performance verification model 216 and the label of the learning data from each of different viewpoints (S812). The learning processing section 250 thereafter updates the parameters of the performance verification model 216 on the basis of the obtained differences (S813).

As explained above, the performance verification system 1 of this embodiment extracts a partial code from the source code, converts the extracted partial code into a feature vector, and inputs the converted feature vector to the performance verification model 216, thereby verifying the performance of the source code (i.e., performance of the executable code of the source code including the partial code). When the performance verification system 1 verifies the performance on the basis of the source code in this manner, it is possible to verify, for example, the performance of the source code even before its executable code is generated. This makes it possible, for example, for users such as developers to verify as needed the performance of the source code when its executable code is executed while describing the source code. This means fewer rework man-hours are needed than if the verification is made after generation of the executable code. It is also possible to detect at an early stage code that, lying in the source code, can become a bottleneck of the performance. Since the performance verification system 1 verifies the performance on the basis of the source code, there is no need to set test cases or to prepare the test data. The performance verification system 1 can also be applied to programming languages that need not be compiled, such as interpreter type languages. In this manner, the performance verification system 1 of this embodiment significantly offloads the verification of the performance of software at the time of development or maintenance and thereby permits efficient system development and maintenance.

Explained below are usage examples (application examples) of the performance verification system 1.

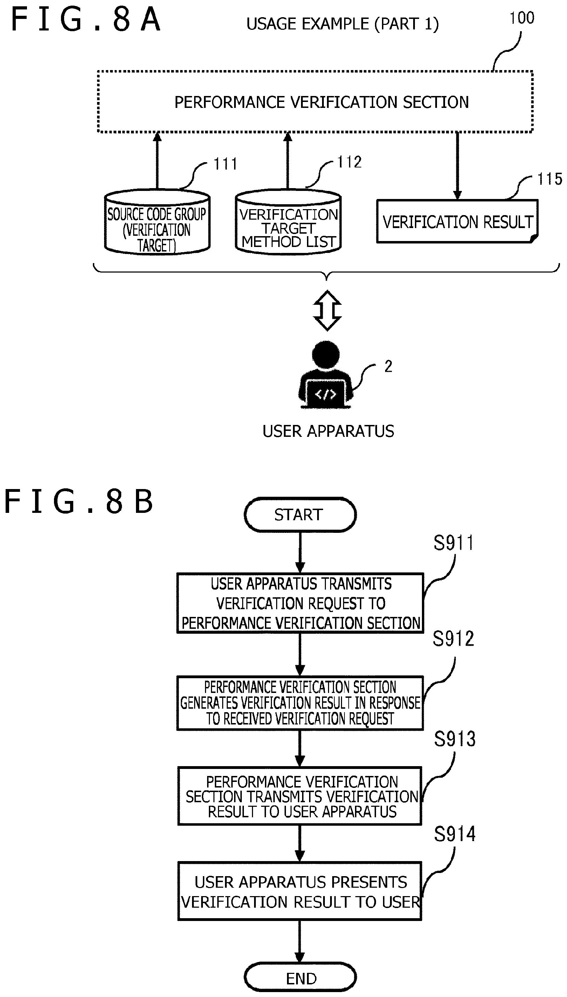

FIG. 8A is a diagram depicting one usage example of the performance verification system 1. In this example, the user who develops or maintains software prepares its source code by use of a user apparatus 2 (information processing apparatus). The user apparatus 2 transmits to the performance verification section 100 a request to verify the source code prepared by the user. Upon receipt of the verification request, the performance verification section 100 generates a verification result 115 of the source code and transmits the generated verification result 115 to the user apparatus 2.

Utilizing the performance verification system 1 in this manner allows the user describing a source code to verify the performance of the source code easily and quickly, the source code being targeted to be developed or maintained by use of an integrated development environment (IDE) running on the user apparatus 2, for example. This enables the user to proceed with development or maintenance work while verifying the performance of the source code as needed. It is thus possible efficiently to prepare high-quality software that meets performance requirements.

FIG. 8B is a flowchart explaining the process performed by the user apparatus 2 and performance verification section 100 in the usage example in FIG. 8A. First, the user apparatus 2 transmits to the performance verification section 100 a verification request accompanied by a source code (source code group (verification target) 111 and verification target method list 112; S911). The performance verification section 100 generates a verification result 115 on the basis of the received source code (S912). The performance verification section 100 transmits the generated verification result 115 to the user apparatus 2 (S913). Upon receipt of the verification result 115, the user apparatus 2 presents its content to the user (S914).

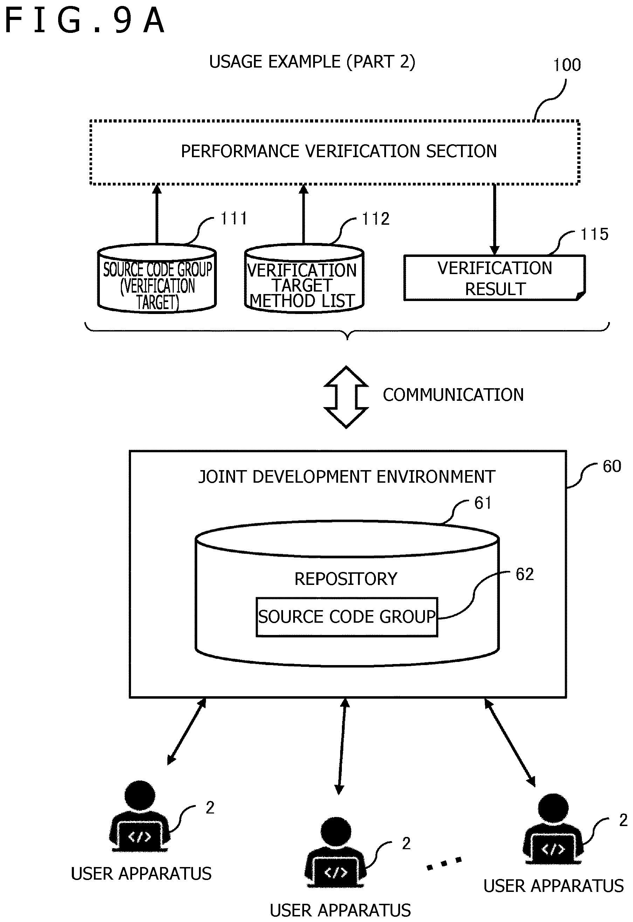

FIG. 9A is a diagram depicting another usage example of the performance verification system 1. This is an example where multiple users making use of a joint development environment 60 jointly carry out the development or maintenance of software. The joint development environment 60, which is communicably connected with multiple user apparatuses 2 each operated by a different user, manages with a repository 61 a source code group 62 targeted to be developed or maintained.

The joint development environment 60 is communicably connected with the performance verification section 100. Upon receipt of a source code and a verification request regarding the source code from the user apparatus 2, the joint development environment 60 transmits the verification request together with the received source code to the performance verification section 100. On receiving the verification request, the performance verification section 100 generates a verification result 115 regarding the source code and transmits the generated verification result 115 to the joint development environment 60.

If the performance indicated by the received verification result 115 meets preset performance requirements, the joint development environment 60 registers the updated source code with the repository 61. On the other hand, if the performance indicated by the received verification result 115 fails to meet the preset performance requirements, the joint development environment 60 does not register the updated source code with the repository 61. The joint development environment 60 proceeds to transmit to the user apparatuses 2 a notification indicating that the source code has failed to meet the performance requirements.

In the case where the performance verification system 1 is used in this manner, only the source code group 62 meeting the performance requirements is managed with the repository 61 of the joint development environment 60. This makes it possible constantly to ensure the quality of software.

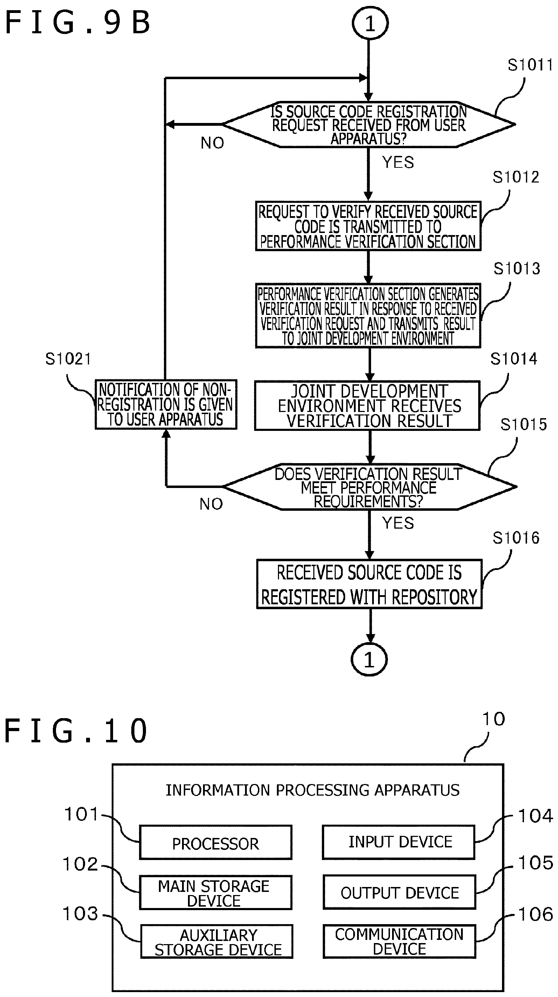

FIG. 9B is a flowchart explaining the process performed by the user apparatus 2, joint development environment 60, and performance verification section 100 in the usage example in FIG. 9A. The joint development environment 60 monitors receipt of a registration request accompanied by a source code (source code group (verification target) 111 and verification target method list 112) from the user apparatus 2 (S1011: NO). Upon receipt of the registration request (S1011: YES), the joint development environment 60 transmits a source code verification request together with the received source code to the performance verification section 100 (S1012). On receiving the source code and the verification request, the performance verification section 100 generates a verification result 115 regarding the received source code, and transmits the generated verification result 115 to the joint development environment 60 (S1013). Upon receipt of the verification result 115 (S1014), the joint development environment 60 determines whether the verification result 115 meets preset performance requirements (S1015). If it is determined that the verification result 115 fails to meet the preset performance requirements (S1015: NO), the joint development environment 60 transmits to the user apparatus 2 a notification indicating that the source code received in S1011 has failed to meet the performance requirements and cannot be registered with the repository (non-registration notification; S1021). Control is then returned to S1011. On the other hand, if it is determined that the verification result 115 meets the preset performance requirements (S1015: YES), the joint development environment 60 registers the source code received in S1011 with the repository, and transmits to the user apparatus 2 a notification indicating that registration of the source code is completed (S1016). Thereafter, control is returned to S1011.

FIG. 10 depicts an exemplary information processing apparatus (computer) used for implementing the performance verification system 1, user apparatus 2, and joint development environment 60 explained above. An information processing apparatus 10 of this example includes a processor 101, a main storage device 102, an auxiliary storage device 103, an input device 104, an output device 105, and a communication device 106.

The information processing apparatus 10 of this example may be implemented partially or in total by use of virtual information processing resources provided by virtualization and process space separation technologies, such as virtual servers offered by cloud systems, for example. Also, the functions provided by the information processing apparatus 10 may be implemented partially or in total by services offered by cloud systems through an API (Application Program Interface), for example. Further, one information processing apparatus 10 may be shared by at least two of the performance verification system 1, user apparatus 2, and joint development environment 60.

In FIG. 10, the processor 101 is configured using, for example, a CPU (Central Processing Unit), MPU (Micro Processing Unit), GPU (Graphics Processing Unit), FPGA (Field Programmable Gate Array), ASIC (Application Specific Integrated Circuit), or AI (Artificial Intelligence) chip.

The main storage device 102 stores programs and data. For example, the main storage device 102 is a ROM (Read Only Memory), RAM (Random Access Memory), or nonvolatile memory (NVRAM (Non Volatile RAM)).

The auxiliary storage device 103 is an SSD (Solid State Drive), hard disk drive, optical storage device (CD (Compact Disc), DVD (Digital Versatile Disc), etc.), storage system; reader/writer for recording media such as IC cards, SD cards, and optical recording media; or storage regions of cloud servers, for example. Programs and data may be read into the auxiliary storage device 103 by way of the reader for recording media or via the communication device 106. The programs and data held (stored) in the auxiliary storage device 103 are read as needed into the main storage device 102.

The input device 104 is an interface that receives input from the outside. For example, the input device 104 is a keyboard, a mouse, a touch panel, a card reader, a pen-input tablet, or a voice input device.

The output device 105 is an interface that outputs diverse information such as processing progress and processing results. For example, the output device 105 is a display device (liquid crystal monitor, LCD (Liquid Crystal Display), graphic card, etc.) for visualizing the diverse information, a device for vocalizing the diverse information (audio output device (speakers, **etc.)),** or a device for transcribing the diverse information (printer, etc.). For example, the information processing apparatus 10 may be configured to output and input information to and from other devices via the communication device 106.

The input device 104 and the output device 105 constitute a user interface that presents and receives information to and from the user.

The communication device 106 (communication section) is a device that conducts communication with other devices. The communication device 106 is a wired or wireless communication interface that implements communication with other devices via a communication network (control system network 50, information/control system network 51, information system network 52). For example, the communication device 106 is an NIC (Network Interface Card), a wireless communication module, or a USB module.

An operating system, a file system, DBMS (DataBase Management System) (relational database, NoSQL, etc.), KVS (Key-Value Store), other diverse software (software, middleware, and various applications for implementing the user interface such as a GUI (Graphical User Interface) using the input device 104 and output device 105) may be installed in the information processing system 10, for example.

The functions provided by the performance verification system 1, user apparatus 2, and joint development environment 60 are implemented by the processor 101 reading and executing relevant programs held in the main storage device 102 or by use of the hardware of the information processing apparatus 10 (FPGA, ASIC, AI chip, etc.), for example. The diverse data held by the performance verification system 1, user apparatus 2, and joint development environment 60 are stored into the main storage device 102 and auxiliary storage device 103 (storage section).

The diverse functions of the performance verification system 1 may be implemented partially or wholly by use of various known data mining methods such as text data mining, various known processing methods (morphological analysis, parsing, semantic analysis, context analysis, feature extraction, word embeddings, named entity extraction, text classification, series labeling), or various known machine learning methods (deep learning (DNN (Deep Neural Network), RNN (Recurrent Neural Network), etc.), for example.

It is to be understood that while the invention has been described in conjunction with a specific embodiment, it is evident that many alternatives, modifications and variations are possible within the scope of this invention. For example, whereas the above-described embodiment gives detailed and comprehensive explanations of this invention, the invention is not necessarily limited to any embodiment having all the configurations and components discussed above. Also, the above-described configurations or components may be partially deleted, changed, or supplemented as needed with suitable configurations or components to constitute another valid embodiment of the present invention.

For example, variations of the above-described partial code extraction method (FIGS. 2A and 3A), variations of the above-described feature vector generation method (FIGS. 4A and 5A), and variations of the above-described model training method (FIGS. 6A and 7A) may be diversely combined to envisage varieties of embodiments.

Whereas the embodiment above is described using examples in which the partial codes are extracted in units of "methods" from the code, the partial codes may be extracted from the code in units of other processing blocks such as "function" or "class." Alternatively, the partial codes may be extracted from the code in accordance with an extraction method set by the user.

The above-described configurations, functional sections, processing sections, and processing means may be implemented partially or in total by hardware such as suitably designed integrated circuits. The above-described configurations and functions may be implemented by software run by a processor interpreting and executing the programs for implementing the respective functions. The information such as programs, tables, and files for implementing the functions may be placed in a recording device such as a memory, hard disk, or SSD (Solid State Drive); or on recording media including IC cards, SD cards, and DVDs.

The functional sections, processing sections, and databases of each information processing apparatus discussed above are shown to be arranged only in an illustrative manner. These functional sections, processing sections, and databases may be optimally arranged from the viewpoint of the performance, processing efficiency, and communication efficiency of the hardware and software included in the relevant devices.

The configuration (schema, etc.) of the database for holding the above-mentioned diverse data may be changed flexibly from the viewpoint of efficient resource usage, improvement in processing efficiency, improvement in access efficiency, or improvement in search efficiency.

### Reference Signs List

- 1:: Performance verification system
- 2:: User apparatus
- 60:: Joint development environment
- 61:: Repository
- 62:: Source code group
- 100:: Performance verification section
- 111:: Source code group (verification target)
- 112:: Verification target method list
- 113:: Partial code group (verification target)
- 114:: Feature vector group (verification target)
- 115:: Verification result
- 120:: Partial code extraction section
- 130:: Feature vector generation section
- 140:: Performance verification processing section
- 200:: Model training section
- 211:: Source code group (for learning)
- 212:: Performance label
- 213:: Partial code group (for learning)
- 214:: Feature vector group (for learning)
- 215:: Learning data group
- 216:: Performance verification model
- 220:: Partial code extraction section
- 230:: Feature vector generation section
- 240:: Learning data generation section
- 250:: Learning processing section
- S300:: Partial code extraction process
- S400:: Partial code extraction process
- S500:: Feature vector generation process
- S610:: Word dictionary generation process
- S620:: Feature vectorization process
- S710:: Learning process
- S810:: Learning process

## Claims

1. A software performance verification system (1) configured by use of an information processing apparatus (10), the software performance verification system comprising:
a storage section (102, 103) that stores program code;
a partial code extraction section (120, 220) that extracts a partial code as part of the code;
a feature vector generation section (130, 230) that generates a feature vector based on the partial code;
a learning processing section (250) that trains a performance verification model (216) that is a machine learning model being trained by use of learning data that includes the feature vector of the partial code for learning and performance information indicative of the performance of software implemented on the basis of the partial code, the performance of software being indicated by at least one of indicators of throughput, a response time, and a resource usage that are obtained by executing the software; and
a performance verification processing section (140) that generates, as a verification result (115) of the partial code, information based on output obtained from the performance verification model (216) through input of the partial code as a verification target to the performance verification model (216), wherein the output obtained from the performance verification model (216) comprises a probability value indicative of a performance of a process implementing the partial code.

2. The software performance verification system according to claim **1,** wherein:
the code includes a description of a method, and
the partial code extraction section (120, 220) extracts the partial code from the code in units of the method.

3. The software performance verification system according to claim **1,** wherein:
the code includes a description of a method, and
the partial code extraction section (120, 220) extracts, as the partial code, a description including the description of one method and the description of another method having a call relation with the method.

4. The software performance verification system according to claim **1,** wherein:
the feature vector generation section (130, 230) generates, as the feature vector, a vector having metrics values acquired from the partial code as an element of the vector.

5. The software performance verification system according to claim 1, wherein:
the storage section (102, 103) stores a word dictionary including information associating a description obtained by converting to common form a word used in the code describing the software with a value set for each such description, and
the feature vector generation section (130, 230) converts a word included in the partial code into a common form word, acquires from the word dictionary a value corresponding to the description of the word, and generates a vector having the acquired value as an element thereof and configuring the feature vector.

6. The software performance verification system according to claim 1, wherein:
the performance verification model (216) outputs the probability of there being a problem with the performance of a process to be implemented on a basis of the partial code.

7. The software performance verification system according to claim 1, wherein:
the performance verification model (216) outputs a plurality of indicators indicating the performance of a process to be implemented on a basis of the partial code, the indicators being based each on a different viewpoint.

8. The software performance verification system according to claim 2, wherein:
the software performance verification system further includes a user interface that receives, from a user, designation of the code and designation of a predetermined method described in the code, and
the partial code extraction section (120, 220) extracts as the partial code the description of the predetermined method designated by the user in the code.

9. The software performance verification system according to claim 1, wherein:
the software performance verification system further includes a communication section that communicates with a joint development environment that uses a repository to manage the code jointly developed by a plurality of users, the joint development environment determining whether to register the code with the repository depending on the verification result (115),
upon receipt, by the communication section, of a request to verify the code from the joint development environment,
the partial code extraction section (120, 220) extracts the partial code from the code,
the feature vector generation section (130, 230) generates a feature vector based on the partial code, and
the performance verification processing section (140) generates the verification result (115) by inputting the feature vector of the partial code to the performance verification model (216), and transmits the verification result (115) to the joint development environment.

10. A software performance verification method comprising the steps of:
storing program code;
extracting a partial code as part of the code;
generating a feature vector based on the partial code;
training a performance verification model (216) that is a machine learning model being trained by use of learning data that includes the feature vector of the partial code for learning and performance information indicative of the performance of software implemented on the basis of the partial code, the performance of software being indicated by at least one of indicators of throughput, a response time, and a resource usage that are obtained by executing the software; and
generating, as a verification result (115) of the partial code, information based on output obtained from the performance verification model (216) through input of the partial code as a verification target to the performance verification model (216), wherein the output obtained from the performance verification model (216) comprises a probability value indicative of a performance of a process implementing the partial code.

## Patentansprüche

1. Softwareleistungsüberprüfungssystem (1), das durch die Verwendung einer Informationsverarbeitungsvorrichtung (10) ausgelegt ist, wobei das Softwareleistungsüberprüfungssystem Folgendes umfasst:
einen Speicherbereich (102, 103), in dem ein Programmcode gespeichert ist;
einen Teilcodeextraktionsbereich (120, 220), der einen Teilcode als Teil des Codes extrahiert;
einen Merkmalsvektorerzeugungsbereich (130, 230), der einen Merkmalsvektor basierend auf dem Teilcode erzeugt;
einen Lernverarbeitungsbereich (250), der ein Leistungsüberprüfungsmodell (216) trainiert, bei dem es sich um ein maschinelles Lernmodell handelt, das unter Verwendung von Lerndaten, die den Merkmalsvektor des Teilcodes zum Lernen und Leistungsinformationen umfassen, welche die Leistung der auf Basis des Teilcodes implementierten Software angeben, trainiert wird, wobei die Leistung der Software durch zumindest einen von Indikatoren des Durchsatzes, der Reaktionszeit und der Ressourcennutzung angegeben wird, die durch Ausführen der Software erhalten werden; und
einen Leistungsüberprüfungsverarbeitungsbereich (140), der als ein Überprüfungsergebnis (115) des Teilcodes Informationen basierend auf einer Ausgabe erzeugt, die vom Leistungsüberprüfungsmodell (216) durch Eingabe des Teilcodes als ein Überprüfungsziel in das Leistungsüberprüfungsmodell (216) erhalten wurde, wobei die vom Leistungsüberprüfungsmodell (216) erhaltene Ausgabe einen Wahrscheinlichkeitswert umfasst, der die Leistung eines Prozesses angibt, der den Teilcode implementiert.

2. Softwareleistungsüberprüfungssystem nach Anspruch 1, wobei:
der Code eine Beschreibung eines Verfahrens umfasst und
der Teilcodeextraktionsbereich (120, 220) den Teilcode aus dem Code in Einheiten des Verfahrens extrahiert.

3. Softwareleistungsüberprüfungssystem nach Anspruch 1, wobei:
der Code eine Beschreibung eines Verfahrens umfasst und
der Teilcodeextraktionsbereich (120, 220) als Teilcode eine Beschreibung extrahiert, welche die Beschreibung eines Verfahrens und die Beschreibung eines weiteren Verfahrens mit einer Aufrufbeziehung mit dem Verfahren umfasst.

4. Softwareleistungsüberprüfungssystem nach Anspruch 1, wobei:
der Merkmalsvektorerzeugungsbereich (130, 230) als den Merkmalsvektor einen Vektor mit Metrikwerten, die vom Teilcode erhalten werden, als ein Element des Vektors erzeugt.

5. Softwareleistungsüberprüfungssystem nach Anspruch 1, wobei:
im Speicherbereich (102, 103) ein Wörterbuch gespeichert ist, das Informationen umfasst, die eine Beschreibung, die durch Umwandeln eines Worts, das im Code verwendet wird, der die Software beschreibt, in eine allgemeine Form erhalten wird, zu einem Wertesatz für jede solche Beschreibung zuweist, und
der Merkmalsvektorerzeugungsbereich (130, 230) ein Wort, das in dem Teilcode enthalten ist, in eine allgemeine Wortform umwandelt, aus dem Wörterbuch einen Wert bezieht, welcher der Beschreibung des Worts entspricht, und einen Vektor mit dem bezogenen Wert als ein Element davon erzeugt und den Merkmalsvektor konfiguriert.

6. Softwareleistungsüberprüfungssystem nach Anspruch 1, wobei:
das Leistungsüberprüfungsmodell (216) die Wahrscheinlichkeit ausgibt, mit der ein Problem bezüglich der Leistung eines Prozesses vorliegt, der auf Basis des Teilcodes implementiert werden soll.

7. Softwareleistungsüberprüfungssystem nach Anspruch 1, wobei:
das Leistungsüberprüfungsmodell (216) eine Vielzahl von Indikatoren ausgibt, welche die Leistung eines Prozesses angeben, der auf Basis des Teilcodes implementiert werden soll, wobei die Indikatoren jeweils auf verschiedenen Gesichtspunkten basieren.

8. Softwareleistungsüberprüfungssystem nach Anspruch 2, wobei:
das Softwareleistungsüberprüfungssystem weiters eine Benutzeroberfläche umfasst, die von einem Benutzer eine Benennung des Codes und eine Benennung eines vorbestimmten Verfahrens, das in dem Code beschrieben ist, empfängt und
der Teilcodeextraktionsbereich (120, 220) als der Teilcode die Beschreibung des vorbestimmten Verfahrens extrahiert, das vom Benutzer im Code benannt wurde.

9. Softwareleistungsüberprüfungssystem nach Anspruch 1, wobei:
das Softwareleistungsüberprüfungssystem weiters einen Kommunikationsbereich umfasst, der mit einer gemeinsamen Entwicklungsumgebung kommuniziert, die ein Repository verwendet, um den Code zu verwalten, der gemeinsam von einer Vielzahl von Benutzern entwickelt wird, wobei die gemeinsame Entwicklungsumgebung je nach Überprüfungsergebnis (115) bestimmt, ob der Code im Repository registriert werden soll,
bei Empfang einer Anfrage zur Überprüfung des Codes von der gemeinsamen Entwicklungsumgebung durch den Kommunikationsbereich der Teilcodeextraktionsbereich (120, 220) den Teilcode vom Code extrahiert,
der Merkmalsvektorerzeugungsbereich (130, 230) einen Merkmalsvektor basierend auf dem Teilcode erzeugt und
der Leistungsüberprüfungsverarbeitungsbereich (140) das Überprüfungsergebnis (115) durch Eingeben des Merkmalsvektors des Teilcodes in das Leistungsüberprüfungsmodell (216) erzeugt und das Überprüfungsergebnis (115) an die gemeinsame Entwicklungsumgebung sendet.

10. Softwareleistungsüberprüfungsverfahren, das folgende Schritte umfasst:
Speichern eines Programmcodes;
Extrahieren eines Teilcodes als Teil des Codes;
Erzeugen eines Merkmalsvektors basierend auf dem Teilcode;
Trainieren eines Leistungsüberprüfungsmodells (216), bei dem es sich um ein maschinelles Lernmodell handelt, das unter Verwendung von Lerndaten trainiert wird, die den Merkmalsvektor des Teilcodes zum Lernen und Leistungsinformationen umfassen, welche die Leistung der auf Basis des Teilcodes implementierten Software angeben, wobei die Leistung der Software durch zumindest einen von Indikatoren des Durchsatzes, der Reaktionszeit und der Ressourcennutzung angegeben wird, die durch Ausführen der Software erhalten werden; und
Erzeugen, als ein Überprüfungsergebnis (115) des Teilcodes, von Informationen basierend auf einer Ausgabe, die vom Leistungsüberprüfungsmodell (216) durch Eingabe des Teilcodes als ein Überprüfungsziel in das Leistungsüberprüfungsmodell (216) erhalten wurde, wobei die vom Leistungsüberprüfungsmodell (216) erhaltene Ausgabe einen Wahrscheinlichkeitswert umfasst, der die Leistung eines Prozesses angibt, der den Teilcode implementiert.

## Revendications

1. Système de vérification de performance de logiciel (1) configuré par utilisation d'un appareil de traitement d'informations (10), le système de vérification de performance de logiciel comprenant :
une section de stockage (102, 103) qui stocke un code de programme ;
une section d'extraction de code partiel (120, 220) qui extrait un code partiel en tant que partie du code ;
une section de génération de vecteur de caractéristique (130, 230) qui génère un vecteur de caractéristique sur la base du code partiel ;
une section de traitement d'apprentissage (250) qui entraîne un modèle de vérification de performance (216) qui est un modèle d'apprentissage automatique entraîné par utilisation de données d'apprentissage qui comprennent le vecteur de caractéristique du code partiel pour apprentissage et des informations de performance indicatives de la performance du logiciel implémentée sur la base du code partiel, la performance du logiciel étant indiquée par au moins un parmi des indicateurs de débit, un temps de réponse et une utilisation de ressource qui sont obtenus en exécutant le logiciel ; et
une section de traitement de vérification de performance (140) qui génère, en tant que résultat de vérification (115) du code partiel, des informations basées sur une sortie obtenue à partir du modèle de vérification de performance (216) par l'intermédiaire d'une entrée du code partiel en tant que cible de vérification vers le modèle de vérification de performance (216), dans lequel la sortie obtenue à partir du modèle de vérification de performance (216) comprend une valeur de probabilité indicative d'une performance d'un processus mettant en œuvre le code partiel.

2. Système de vérification de performance de logiciel selon la revendication 1, dans lequel :
le code inclut une description d'un procédé, et
la section d'extraction de code partiel (120, 220) extrait le code partiel à partir du code dans des unités du procédé.

3. Système de vérification de performance de logiciel selon la revendication 1, dans lequel :
le code inclut une description d'un procédé, et
la section d'extraction de code partiel (120, 220) extrait, en tant que code partiel, une description comprenant la description d'un procédé et la description d'un autre procédé présentant une relation d'appel avec le procédé.

4. Système de vérification de performance de logiciel selon la revendication 1, dans lequel :
la section de génération de vecteur de caractéristique (130, 230) génère, en tant que vecteur de caractéristique, un vecteur présentant des valeurs de métriques acquises à partir du code partiel en tant qu'élément du vecteur.

5. Système de vérification de performance de logiciel selon la revendication 1, dans lequel :
la section de stockage (102, 103) stocke un dictionnaire de mots comprenant des informations associant une description obtenue en convertissant en une forme commune un mot utilisé dans le code décrivant le logiciel avec une valeur définie pour chaque telle description, et
la section de génération de vecteur de caractéristique (130, 230) convertit un mot inclus dans le code partiel en un mot de forme commune, acquiert à partir du dictionnaire de mots une valeur correspondant à la description du mot, et génère un vecteur présentant la valeur acquise en tant qu'élément de celui-ci et configurant le vecteur de caractéristique.

6. Système de vérification de performance de logiciel selon la revendication 1, dans lequel :
le modèle de vérification de performance (216) délivre en sortie la probabilité qu'il y ait un problème avec la performance d'un processus à mettre en œuvre sur la base du code partiel.

7. Système de vérification de performance de logiciel selon la revendication 1, dans lequel :
le modèle de vérification de performance (216) délivre en sortie une pluralité d'indicateurs indiquant la performance d'un processus à mettre en œuvre sur la base du code partiel, les indicateurs étant basés chacun sur un point de vue différent.

8. Système de vérification de performance de logiciel selon la revendication 2, dans lequel :
le système de vérification de performance de logiciel comprend en outre une interface utilisateur qui reçoit, de la part d'un utilisateur, la désignation du code et la désignation d'un procédé prédéterminé décrit dans le code, et
la section d'extraction de code partiel (120, 220) extrait en tant que code partiel la description du procédé prédéterminé désigné par l'utilisateur dans le code.

9. Système de vérification de performance de logiciel selon la revendication 1, dans lequel :
le système de vérification de performance de logiciel comprend en outre une section de communication qui communique avec un environnement de développement conjoint qui utilise un référentiel pour gérer le code développé conjointement par une pluralité d'utilisateurs, l'environnement de développement conjoint déterminant s'il faut ou non enregistrer le code avec le référentiel en fonction du résultat de vérification (115),
dès réception, par la section de communication, d'une demande de vérification du code de la part de l'environnement de développement conjoint,
la section d'extraction de code partiel (120, 220) extrait le code partiel à partir du code,
la section de génération de vecteur de caractéristique (130, 230) génère un vecteur de caractéristique basé sur le code partiel, et
la section de traitement de vérification de performance (140) génère le résultat de vérification (115) en entrant le vecteur de caractéristiques du code partiel dans le modèle de vérification de performance (216), et transmet le résultat de vérification (115) à l'environnement de développement conjoint.

10. Procédé de vérification de performance de logiciel, comprenant les étapes consistant à :
stocker le code de programme ;
extraire un code partiel en tant que partie du code ;
générer un vecteur de caractéristique sur la base du code partiel ;
entraîner un modèle de vérification de performance (216) qui est un modèle d'apprentissage automatique entraîné en utilisant des données d'apprentissage qui comprennent le vecteur de caractéristique du code partiel pour apprentissage et des informations de performance indicatives de la performance du logiciel implémentée sur la base du code partiel, la performance du logiciel étant indiquée par au moins un parmi des indicateurs de débit, un temps de réponse et une utilisation de ressource qui sont obtenus en exécutant le logiciel ; et
générer, en tant que résultat de vérification (115) du code partiel, des informations basées sur une sortie obtenue à partir du modèle de vérification de performance (216) par l'intermédiaire d'une entrée du code partiel en tant que cible de vérification vers le modèle de vérification de performance (216), dans lequel la sortie obtenue à partir du modèle de vérification de performance (216) comprend une valeur de probabilité indicative d'une performance d'un processus mettant en œuvre le code partiel.
